# EUROPÄISCHE PATENTSCHRIFT

(11) **EP 0 645 523 B1**
(45) Veröffentlichungstag und Bekanntmachung des Hinweises auf die Patenterteilung: **06.05.1998**
(21) Anmeldenummer: 94108429.5
(22) Anmeldetag: 01.06.1994
(51) Int. Cl.: F01L 1/26, F01L 13/00, F02B 27/02

(54) **Brennkraftmaschine**
Internal combustion engine
Moteur à combustion interne

(30) Priorität: 22.09.1993 DE 4332198
(43) Veröffentlichungstag der Anmeldung: 29.03.1995
(73) Patentinhaber: Dr.Ing.h.c. F. Porsche Aktiengesellschaft, 70435 Stuttgart (DE)
(72) Erfinder: Brüstle, Claus, D-71296 Heimsheim (DE); Rutschmann, Erwin, D-75233 Tiefenbronn (DE); Ickinger, Frank, D-74385 Pleidelsheim (DE)

(56) Entgegenhaltungen:
- EP-A- 0 470 874
- WO-A-90/05842
- DE-A- 3 508 763
- FR-A- 2 512 493
- US-A- 4 679 532

## Beschreibung

Die Erfindung betrifft eine Brennkraftmaschine nach dem Oberbegriff des Patentanspruches 1.

Brennkraftmaschinen mit multipler Ventilanordnung pro Zylinder, d.h. mehr als ein Einlaßventil und ein Auslaßventil sind hinlänglich bekannt. So nutzt die DE-OS 28 38 681 zwei Einlaßventile und ein Auslaßventil je Zylinder-Brennraum, wobei das eine Einlaßventil imTeillastgebiet und das andere Einlaßventil im übrigen Lastgebiet arbeitet.

Aus der EP 0 063 385 B1 ist eine Viertakt-Brennkraftmaschine bekannt, in deren jeweiligem Brennraum drei Einlaßventile und zwei Auslaßventile arbeiten, mit denen die Ladung an sich und die Ladungswechsel beim Betrieb der Brennkraftmaschine verbessert werden sollen.

Darüber hinaus ist es bekannt, DE 37 24 495 Al, drei Einlaßventile und ein Auslaßventil pro Zylinder vorzusehen. Das Gemisch wird bei dieser Ausführung mit zwei Zündkerzen entflammt. Mit dieser Ausführung wird angestrebt, einen hohen Füllungsgrad mit guter Leistung zu erzielen.

Aus der gattungsgemäßen DE 35 08 763 Al ist weiterhin eine Brennkraftmaschine mit jeweils vier Ventilen je Zylinder bekannt, von denen drei als Einlaßventile und eins als Auslaßventil ausgebildet sind. Die Ventile sind so angeordnet, daß ein erstes und ein zweites Einlaßventil auf einer Seite der Mittellängsebene der Zylinderreihe und das dritte Einlaßventil zusammen mit dem Auslaßventil auf der anderen Seite der Mittellängsebene angeordnet sind. Weiterhin ist vorgesehen, daß im Saugkanal des ersten und dritten Einlaßventils jeweils ein als Drosselklappe ausgebildetes Einlaßregelventil angeordnet ist, mit dem die Luftzufuhr in den Brennraum steuerbar ist.

Aufgabe der Erfindung ist es, eine Mehrventilanordnung für eine fortschrittliche Viertakt-Brennkraftmaschine zu schaffen, die unter Verwendung von drei Einlaßventilen und einem Auslaßventil den Betrieb dieser Brennkraftmaschine bei guter Leistung und hohem Drehmoment bezüglich Verbrauch und Ausscheidung von Abgasemissionen verbessert. Dabei sollte aber auch sichergestellt sein, daß der bauliche Aufwand innerhalb eines vertretbaren Rahmens liegt.

Erfindungsgemäß wird diese Aufgabe durch die kennzeichnenden Merkmale des Patentanspruches 1 gelöst.

Das erste und das zweite Einlaßventil sind erfindungsgemäß mittels Schaltelementen steuerbar, welche z.B. zwischen Nockenwelle und diesen Einlaßventilen geschaltete hydraulischen Stößel sein können, wie sie in der PCT/EP92/00502 beschrieben sind. Hierdurch sind Leistung, Drehmoment, Verbrauch und Abgasemission der Brennkraftmaschine günstig beeinflußbar. Bedeutsam ist dabei, daß das dritte, permanent betätigte Einlaßventil auf der Seite des Auslaßventils angeordnet ist, was zu einer erwünscht raschen Aufheizung der mit diesem Teillast-Ventil verbundenen Saugleitung führt. Anders ausgedrückt, besagte Ventilanordnung ist eine Kombination aus Cross-flow- und Uni-flow-Prinzip im Zylinderkopf.

Ein weiterer Vorteil dieser Ausbildung ist, daß die drei Einlaßventile und das Auslaßventil in der konstruktiven Ausprägung ein Optimum zwischen Dreiventiltechnik (zwei Einlaßventile; ein Auslaßventil) und Fünfventiltechnik (drei Einlaßventile, zwei Auslaßventile) darstellen. Dabei erfordert diese Mehrventilkonfiguration lediglich zwei an sich vorhandene Nockenwellen.

Diese Ausbildung kann auf vorteilhafte Weise in Verbindung mit getrennten Saugleitungen für das erste und das zweite Einlaßventil beziehungsweise das dritte Einlaßventil erfolgen, wobei die Saugleitung des dritten Einlaßventils zumindest abschnittsweise in die Zylinderkopfhaube integriert werden kann.

Schließlich sind die vier Ventile derart im Brennraum angeordnet, daß räumlich vorteilhafte Bedingungen entstehen, auch in Verbindung mit voneinander getrennten Saugleitungen.

In der Zeichnung ist ein Ausführungsbeispiel der Erfindung dargestellt, daß nachstehend näher beschrieben wird.

Es zeigen
- Fig. 1: eine schematische Ansicht von oben auf eine mehrzylindrige Brennkraftmaschine mit der erfindungsgemäßen multiplen Ventilanordnung,
- Fig. 2: eine Einzelheit X der Fig. 1 in größerem Maßstab,
- Fig. 3: einen Schnitt nach der Linie III-III der Fig. 2,
- Fig. 4: ein Diagramm, aus dem Betriebszustände der Brennkraftmaschine hervorgehen.

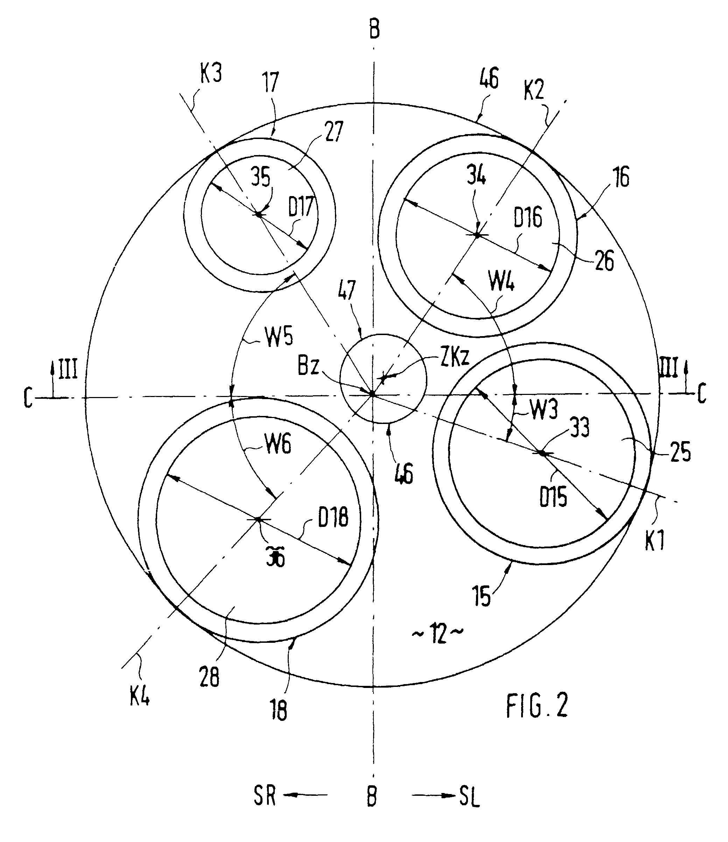

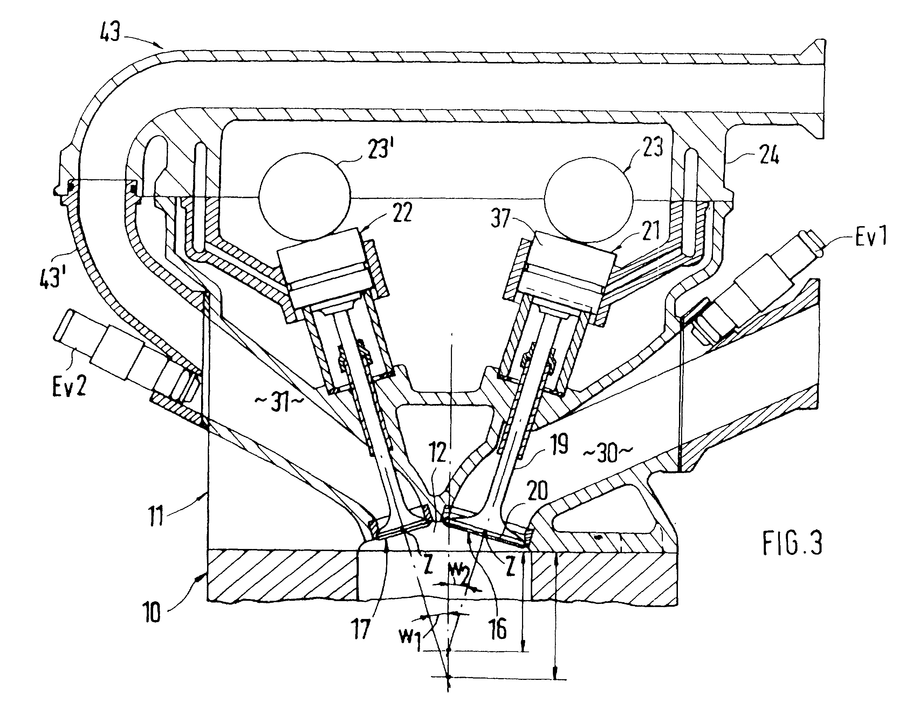

Eine Brennkraftmaschine 1 der Hubkolbenbauart mit Fremdzündung umfaßt mehrere Zylinder 2, 3, 4 und 5, 6, 7 und gegenüberliegende Zylinderreihen 8, 9. Die Zylinder 2, 3, 4 sind in einem Zylinderkurbelgehäuse 10 untergebracht, das einen Zylinderkopf 11 mit Brennräumen 12, 13, 14 umfaßt. In jedem Brennraum 12 arbeiten Gaswechselventile, die durch drei Einlaßventile, nämlich ein erstes Einlaßventil 15, ein zweites Einlaßventil 16 und ein drittes Einlaßventil 17 sowie ein Auslaßventil 18 dargestellt sind. Bei den Ventilen, z.B. zweites Einlaßventil 16 und drittes Einlaßventil 17 handelt es sich um Hubventile mit Ventilschaft 19 und Ventilteller 20 (Fig. 3). Sämtliche Ventile arbeiten unter Vermittlung von hydraulischen Stößeln 21, 22 mit Nockenwellen 23, 23' zusammen, die im Zylinderkopf 11 oder zwischen letzterem und einer den Zylinderkopf abdeckenden Zylinderhaube 24 angeordnet sind. Die Ventilteller 20 der Ventile 15, 16, 17, 18 wirken auf Ventilöffnungen 25, 26, 27, 28 ein, die Ansaugkanäle 29, 30, 31 bzw. einen Auslaßkanal 32 gegenüber dem Brennraum 12 begrenzen. Die Ventilöffnungen 25, 26, 27, 28 umgeben Ventilöffnungszentren 33, 34, 35, 36 (Fig. 2).
Mit Ev1 und Ev2 sind Einspritzventile für die Einlaßventile 16 und 17 bezeichnet.

Die Ventilöffnungszentren 33, 34 des ersten Einlaßventils 15 und des zweiten Einlaßventils 16 liegen auf der einen Seite SR einer Mittellängsebene B-B der Brennkraftmaschine 1, die beispielsweise eine Mittellinie einer nicht gezeigten Kurbelwelle einschließen kann. Dagegen sind die Ventilöffnungszentren 35, 36 des dritten Einlaßventils 17 und des Auslaßventils 18 auf der anderen Seite SL dieser Mittellängsebene B-B angeordnet.

Die Ventile 16, 17 sind schräg im Zylinderkopf 10 angeordnet, wobei ihre Winkel w₁ und w₂ zur Mittellängsebene B-B in etwa gleich sind (w₁ = w₂).

Der Durchmesser D 17 der Ventilöffnung 27 des dritten Ventils 17 ist kleiner als die Durchmesser D 15 und D 16 der übrigen Einlaßventile 16 und 17, jedoch ist der Durchmesser D 16 der Ventilöffnung 26 des zweiten Einlaßventils 16 kleiner als der Durchmesser D 15 der Ventilöffnung 25 des ersten Einlaßventils 15. Die Ventilöffnung 28 des Auslaßventils 18 ist größer als die Ventilöffnungen der Einlaßventile, wobei die Größe sämtlicher Ventile rechnerisch/iterativ oder empirisch festgelegt wird.

Das dritte Einlaßventil 17 wie im übrigen auch das Auslaßventil 18 wird während des Betriebs der Brennkraftmaschine 1 permanent von der Nockenwelle 23' betätigt. Dagegen werden das erste Einlaßventil 15 und das zweite Einlaßventil 16 von Schaltelementen 37 während des Betriebs der Brennkraftmaschine zu- bzw. abgeschaltet. Schaltelemente dieser Art behandelt die PCT/EP92/00502. Die Zuschaltung erfolgt beispielsweise last- und drehzahlabhängig.

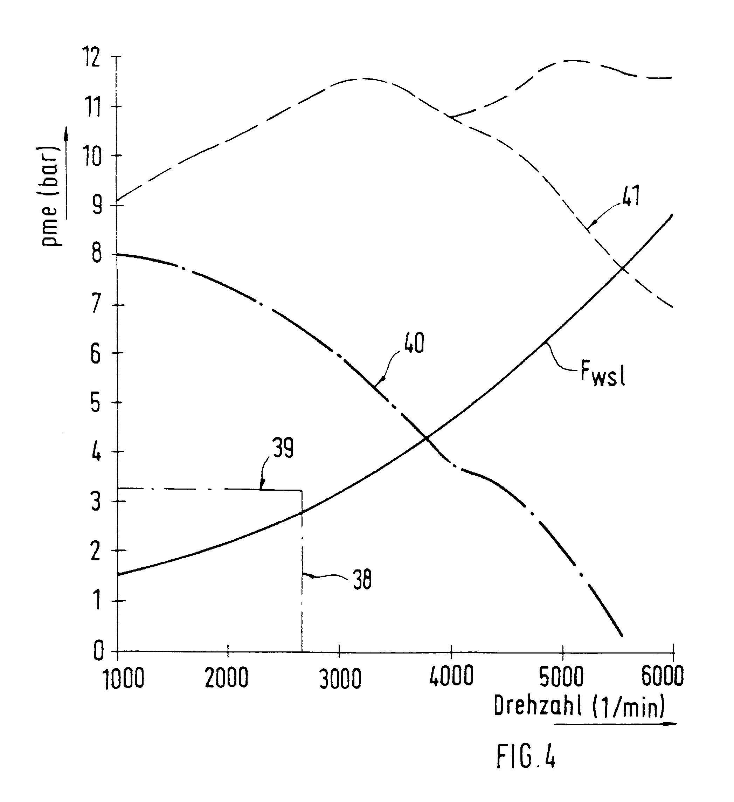

Fig. 4 gibt ein Diagramm wieder, bei dem auf der Abszisse die Drehzahl (1/min) und auf der Ordinate der Mitteldruck pme aufgetragen sind. Eine senkrechte und eine waagrechte Linie 38, 39 begrenzen einen Feldbereich, der einen günstigen Verbrauch und eine günstigere Massenemission darstellt. Mit 40 ist eine erste Vollastlinie bezeichnet, unterhalb der nur das dritte Einlaßventil 17 arbeitet. Jenseits dieser ersten Vollastlinie 40 wird das zweite Einlaßventil 16 zugeschaltet - Schaltelement 37 - , so daß dann das dritte Einlaßventil 17 und das zweite Einlaßventil 16 gemeinsam arbeiten. Ferner ist in das Diagramm noch eine weitere Vollastlinie 41 eingetragen, ab welcher sämtliche Einlaßventile 15, 16, 17 wirksam werden. Eine Fahrwiderstandslinie eines Kraftfahrzeuges ist mit Fwsl bezeichnet.

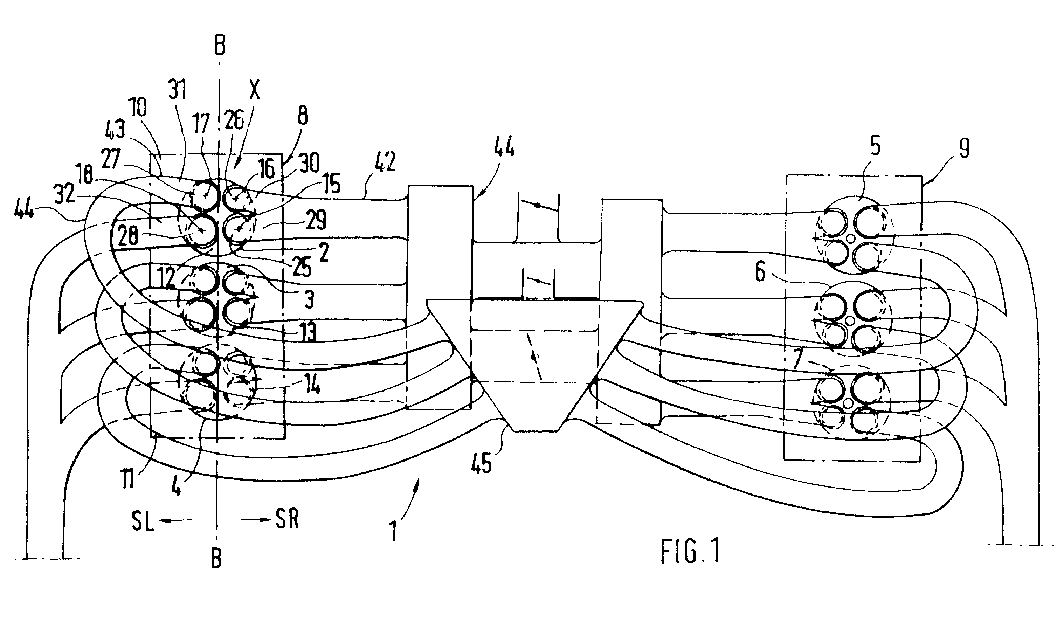

Nach Fig. 1 werden dem ersten Einlaßventil 15 und dem zweiten Einlaßventil 16 über eine erste direkte Saugleitung 42 und dem dritten Einlaßventil 17 über eine zweite Saugleitung 43 Medium, ein Kraftstoff-Luft-Gemisch, zugeführt. Die zweite Saugleitung 43 kann als Umlenkleitung mit einem 90°-Bogen 44 ausgeführt sein. Es besteht jedoch auch die Möglichkeit, die zweite Saugleitung 43 in die Zylinderkopfhaube 24 zu integrieren (Fig. 3), wobei beide Ausführungen den Zylinderkopf 11 überqueren. Bei 43' ist ein separates Verbindungsrohrstück zwischen Saugleitung 43 und Zylinderkopf 11angedeutet.

Die erste Saugleitung 42 ist Bestandteil einer ersten Sauganlage 44, die zweite Saugleitung 43 einer zweiten Sauganlage 45. Beide Saugleitungen 44 und 45 sind voneinander getrennt. Dabei ist die erste Saugleitung 42 relativ kurz und mit relativ großem Querschnitt versehen - für Vollastbereich - ; wogegen die zweite Saugleitung 43 relativ lang und mit relativ kleinem Querschnitt versehen ist - für Teillastbereich - .

Gemäß Fig. 2 sind die Ventilöffnungszentren 33, 34, 35, 36 innerhalb einer Umfangslinie 46 des Brennraums 13 angeordnet, wobei eine senkrecht zur Mittellängsebene B-B verlaufende Querebene C-C der Brennkraftmaschine 1 ein Brennraumzentrum Bz einschließt. Die Ventilöffnungszentren 33, 34, 35, 36 liegen auf das Brennraumzentrum Bz schneidenden radialen Konstruktionslinien K1, K2, K3, K4, die zur Querbene C-C unter nachstehendem Winkel verlaufen:
- Der Winkel w₃ für das Ventilöffnungszentrum 33 der Ventilöffnung 25 des ersten Einlaßventils 15 beträgt zwischen 15° und 25°
- der Winkel w₄ für das Ventilöffnungszentrum 34 der Ventilöffnung 26 des zweiten Einlaßventils 16 beträgt zwischen 50° und 60°
- der Winkel w₅ für das Ventilöffnungszentrum 35 der Ventilöffnung 27 des dritten Einlaßventils 17 beträgt zwischen 50° und 60°
- der Winkel w₆ für das Ventilöffnungszentrum 36 der Ventilöffnung 28 des Auslaßventils 18 beträgt zwischen 40°und 50°.

Bei 46 ist im Brennraum 12 eine Zündkerzenbohrung 47 angedeutet, deren Zündkerzenzentrum ZKz in der Nähe des Brennraumzentrums Bz liegt.

## Patentansprüche

1. Brennkraftmaschine der Viertaktbauart mit mindestens einer Zylinderreihe mit drei Einlaßventilen und einem Auslaßventil pro Zylinder, wobei diese Ventile von in einem Zylinderkopf angeordneten Nockenwellen betätigt werden und mit Ventiltellern auf unterschiedliche Durchmesser aufweisende Ventilöffnungen eines Brennraums einwirken, deren Ventilöffnungszentren beiderseits einer Mittellängsebene liegen, wobei die Ventile (15, 16, 17, 18) in der Weise angeordnet sind, daß die Ventilöffnungszentren (33, 34) der Ventilöffnungen (25, 26) des ersten Einlaßventils (15) und des zweiten Einlaßventils (16) auf der einen Seite SR der Mittellängsebene B-B liegen, wogegen die Ventilöffnungszentren (35, 36) der Ventilöffnungen (27, 28) des dritten Einlaßventils (17) und des Auslaßventils (18) auf der anderen Seite SL der Mittellängsebene B-B liegen, **dadurch gekennzeichnet**, daß das dritte Einlaßventil (17) während des Betriebs der Brennkraftmaschine (1) permanent betätigt wird und daß das erste Einlaßventil (15) und das zweite Einlaßventil (16) mittels Schaltelementen (37) und in Abhängigkeit von Brennkraftmaschinenparametern wie Last, Drehzahl oder dgl. zuschaltbar ist.

2. Brennkraftmaschine nach Anspruch 1, bei der die Ventile im Querschnitt des Zylinderkopfs gesehen im Winkel zu der Mittellängsebene angeordnet sind, **dadurch gekennzeichnet**, daß das zweite Ventil (16) und das dritte Ventil (17) in etwa mit gleichem Winkel (w₁; w₂) zur Mittellängsebene B-B angeordnet sind.

3. Brennkraftmaschine nach Anspruch 1, **dadurch gekennzeichnet**, daß der Durchmesser (D 16) der Ventilöffnung (27) des dritten Ventils (16) kleiner ist als der Durchmesser (D 15 und D 16) der übrigen Einlaßventile (15, 16).

4. Brennkraftmaschine nach Anspruch 1, **dadurch gekennzeichnet**, daß der Durchmesser (D 5) der Ventilöffnung (26) des zweiten Einlaßventils (16) größer ist als der Durchmesser (D 16) der Ventilöffnung (27) des dritten Einlaßventils (17), jedoch ist dieser Durchmesser (D 16) kleiner als der Durchmesser (D 14) der Ventilöffnung (25) des ersten Einlaßventils (15).

5. Brennkraftmaschine nach einem der Ansprüche 1 bis 4, **dadurch gekennzeichnet**, daß dem ersten Einlaßventil (15) und dem zweiten Einlaßventil (16) über eine erste direkte Saugleitung (42) und dem dritten Einlaßventil (17) über eine zweite, den Zylinderkopf (11) überquerende Saugleitung (43) Medium zugeführt wird.

6. Brennkraftmaschine nach Anspruch 5, **dadurch gekennzeichnet**, daß die zweite Saugleitung (43) in eine Zylinderkopfhaube (24) integriert ist.

7. Brennkraftmaschine nach den Ansprüchen 5 und 6, **dadurch gekennzeichnet**, daß die erste Saugleitung (42) und die zweite Saugleitung (43) jeweils Bestandteil von getrennten Sauganlagen (44, 45) sind.

8. Brennkraftmaschine nach einem oder mehreren der vorangehenden Ansprüche, bei der der jeweilige Brennraum - von oben gesehen - von einer Umfangslinie begrenzt wird und ein Brennraumzentrum umfaßt, das eine Querebene des Zylinderkopfs einschließt und die Ventilöffnungszentren der Ventilöffnungen auf, das Brennraumzentrum schneidenden, radialen Konstruktionslinien liegen, die zur Querbene im Winkel angeordnet sind, **dadurch gekennzeichnet,** daß
- der Winkel w₃ für das Ventilöffnungszentrum (33) der Ventilöffnung (25) des ersten Einlaßventils (15) zwischen 15° und 25° beträgt;
- der Winkel w₄ für das Ventilöffnungszentrum (34) der Ventilöffnung (26) des zweiten Einlaßventils (16) zwischen 50° und 60° beträgt;
- der Winkel w₅ für das Ventilöffnungszentrum (35) der Ventilöffnung (27) des dritten Einlaßventils (17) zwischen 50° und 60° beträgt;
- der Winkel w₄ für das Ventilöffnungszentrum (36) der Ventilöffnung (28) des Auslaßventils (18) zwischen 40° und 50° beträgt.

9. Brennkraftmaschine nach einem oder mehreren der vorangehenden Ansprüche mit einer ein Zündkerzenzentrum aufweisenden Zündkerzenbohrung und einem ein Brennraumzentrum umfassenden Brennraum, **dadurch gekennzeichnet**, daß das Zündkerzenzentrum (ZKz) benachbart dem Brennraumzentrum (Bz) im Brennraum (13) liegt.

10. Verfahren zum Betrieb der Brennkraftmaschine nach Anspruch 6, **dadurch gekennzeichnet**, daß die Zuschaltung des ersten Einlaßventils (14) oberhalb einer ersten Vollastlinie (40) und des zweiten Einlaßventils (15) oberhalb einer zweiten Vollastlinie (41) erfolgt.

## Claims

1. A four-stroke internal-combustion engine with at least one row of cylinders with three intake valves and one exhaust valve per cylinder, wherein the said valves are actuated by camshafts arranged in a cylinder head and act with valve discs upon valve openings of a combustion chamber which have different diameters and the centres of which are situated on both sides of a median longitudinal plane, and wherein the valves (15, 16, 17, 18) are arranged in such a way that the centres (33, 34) of the valve openings (25, 26) of the first intake valve (15) and of the second intake valve (16) are situated on one side **SR** of the median longitudinal plane **B-B**, whereas the centres (35, 36) of the valve openings (27, 28) of the third intake valve (17) and of the exhaust valve (18) are situated on the other side **SL** of the median longitudinal plane **B-B**, **characterized in that** the third intake valve (17) is actuated continuously during the operation of the internal-combustion engine (1), and the first intake valve (15) and the second intake valve (16) can be brought into operation by means of switching members (37) and as a function of parameters of the internal-combustion engine such as loading, rotational speed or the like.

2. An internal-combustion engine according to Claim 1, in which the valves are arranged at an angle to the median longitudinal plane as viewed in the cross-section of the cylinder head, **characterized in that** the second valve (16) and the third valve (17) are arranged substantially at the same angle (**w**_{**1**}**; w**_{**2**}) to the median longitudinal plane **B-B**.

3. An internal-combustion engine according to Claim 1, **characterized in that** the diameter (**D 17**) of the opening (27) of the third valve (17) is smaller than the diameter (**D 15** and **D 16**) of the other intake valves (15, 16).

4. An internal-combustion engine according to Claim 1, **characterized in that** the diameter (**D 16**) of the opening (26) of the second intake valve (16) is larger than the diameter (**D 17**) of the opening (27) of the third intake valve (17), but the said diameter (**D 16**) is smaller than the diameter (**D 15**) of the opening (25) of the first intake valve (15).

5. An internal-combustion engine according to one of Claims 1 to 4, **characterized in that** medium is supplied to the first intake valve (15) and the second intake valve (16) by way of a first direct suction line (42) and to the third intake valve (17) by way of a second suction line (43) crossing the cylinder head (11).

6. An internal-combustion engine according to Claim 5, **characterized in that** the second suction line (43) is integrated in a cylinder-head hood (24).

7. An internal-combustion engine according to Claims 5 and 6, **characterized in that** the first suction line (42) and the second suction line (43) are each a constituent part of separate suction units (44, 45).

8. An internal-combustion engine according to one or more of the preceding Claims, in which the respective combustion chamber is bounded by a peripheral line - as viewed from above - and has a centre which lies in a transverse plane of the cylinder head, and the centres of the valve openings are situated on radial construction lines intersecting the centre of the combustion chamber and arranged at an angle to the transverse plane, **characterized in that**
- the angle **w**_{**3**} for the centre (33) of the opening (25) of the first intake valve (15) amounts to between 15° and 25°;
- the angle **w**_{**4**} for the centre (34) of the opening (26) of the second intake valve (16) amounts to between 50° and 60°;
- the angle **w**_{**5**} for the centre (35) of the opening (27) of the third intake valve (17) amounts to between 50° and 60°;
- the angle **w**_{**6**} for the centre (36) of the opening (28) of the exhaust valve (18) amounts to between 40° and 50°.

9. An internal-combustion engine according to one or more of the preceding Claims with a sparking-plug hole having a sparking-plug centre and a combustion chamber having a combustion-chamber centre, **characterized in that** the sparking-plug centre (**ZKz**) is situated adjacent to the combustion-chamber centre (Bz) in the combustion chamber (13).

10. A method of operating the internal-combustion engine according to Claim 6, **characterized in that** the first intake valve (14) is brought into operation above a first full-load line (40) and the second intake valve (15) above a second full-load line (41).

## Revendications

1. Moteur à combustion interne du type à quatre temps, comportant au moins une rangée de cylindres ayant trois soupapes d'admission et une soupape d'échappement par cylindre, ces soupapes étant actionnées par un arbre à cames disposé dans une culasse et agissant, par des plateaux de soupape, sur des ouvertures à soupapes, présentant des diamètres différents, d'une chambre de combustion, ouverture dont les centres sont situés de part et d'autre d'un plan longitudinal médian, les soupapes (15, 16, 17, 18) étant disposées de manière que les centres d'ouvertures de soupapes (33, 34) des ouvertures de soupapes (25, 26i de la première soupape d'admission (15) et de la deuxième soupape d'admission (16) soient situées sur un côté (SR) du plan longitudinal médian (B-B), alors que, par contre, les centres d'ouverture de soupapes (35, 36) des ouvertures de soupapes (27, 28) de la troisième soupape d'admission (17) et de la soupape d'échappement (18) sont situés de l'autre côté SL du plan longitudinal médian (B-B), caractérisé en ce que la troisième soupape d'admission (17) est actionnée de façon permanente pendant le fonctionnement du moteur à combustion interne (1), et en ce que la première soupape d'admission (15) et la deuxième soupape d'admission (16) peuvent être mises en service, au moyen d'éléments de commutation (37) et en fonction de paramètres du moteur à combustion interne, tels que la charge, la vitesse de rotation ou analogue.

2. Moteur à combustion interne selon la revendication 1, dans lequel les soupapes, lorsqu'on observe la culasse en coupe transversale, sont disposées un certain angle par rapport au plan longitudinal médian, caractérisé en ce que la deuxième soupape (16) et la troisième soupape (17) sont disposées à peu près sous le même angle (w₁; w₂) par rapport au plan longitudinal médian B-B.

3. Moteur à combustion interne selon la revendication 1, caractérisé en ce que le diamètre (D16) de l'ouverture de soupapes (27) de la troisième soupape (16) est inférieur aux diamètres (D15 et D16) des autres soupapes d'admission (15, 16).

4. Moteur à combustion interne selon la revendication 1, caractérisé en ce que le diamètre (D5) de l'ouverture de soupape (26) de la deuxième soupape d'admission (16) est plus grand que le diamètre (D16) de l'ouverture de soupapes (27) de la troisième soupape d'admission (17), cependant ce diamètre (D16) étant inférieur au diamètre (D14) de l'ouverture de soupape (25) de la première soupape d'admission (15).

5. Moteur à combustion interne selon l'une des revendications 1 à 4, caractérisé en ce qu'un fluide est amené à la première soupape d'admission (15) et à la deuxième soupape d'admission (16), par une première conduite d'aspiration directe (2), et à la troisième soupape d'admission (17), par une deuxième conduite d'aspiration (43) passant transversalement au-dessus de la culasse (11).

6. Moteur à combustion interne selon la revendication 5, caractérisé en ce que la deuxième conduite d'aspiration (43) est intégrée dans un capot de culasse (24).

7. Moteur à combustion interne selon les revendications 5 et 6, caractérisé en ce que la première conduite d'aspiration (42) et la deuxième conduite d'aspiration (43) font chacune partie de systèmes d'aspiration (44, 45) séparés.

8. Moteur à combustion interne selon l'une ou plusieurs des revendications précédentes, pour lequel la chambre de combustion respective - vue de dessus - est délimitée par une ligne périphérique et comprend un centre de chambre de combustion, qui inclus un plan transversal de la culasse et les centres d'ouverture de soupapes des ouvertures de soupapes sont situés sur des lignes de construction radiales qui passent par le centre de la chambre de combustion et qui sont disposées sous un angle donné par rapport au plan transversal, caractérisé en ce que
- l'angle w₃ du centre d'ouverture de soupape (33) de l'ouverture de soupapes (25) de la première soupape d'admission (15) est compris entre 15 et 25°;
- l'angle w₄ du centre d'ouverture de soupape (34) de l'ouverture de soupapes (26) de la deuxième soupape d'admission (16) est compris entre 50 et 60°;
- l'angle w₅ du centre d'ouverture de soupape (35) de l'ouverture de soupape (27) de la troisième soupape d'admission (17) est compris entre 50 et 60°;
- l'angle w₄ du centre d'ouverture de soupape (36) de l'ouverture de soupape (28) de la soupape d'échappement (18) est compris entre 40 et 50°.

9. Moteur à combustion interne selon l'une ou plusieurs des revendications précédentes, comportant un perçage pour bougie d'allumage présentant un centre de bougie d'allumage et une chambre de combustion comprenant un centre de chambre de combustion, caractérisé en ce que le centre de bougie d'allumage (ZKz) est placé au voisinage du centre de chambre de combustion (Bz) dans la chambre de combustion (13).

10. Procédé de fonctionnement du moteur à combustion interne selon la revendication 6, caractérisé en ce que la mise en service de la première soupape d'admission (14) s'effectue au-dessus d'une première ligne de pleine charge (40) et celle de la deuxième soupape d'admission (15) au-dessus d'une deuxième ligne de pleine charge (41).
